Europäisches Patentamt

European Patent Office

Office européen des brevets

(19)

(11) EP 0 780 457 A2

## (12) EUROPEAN PATENT APPLICATION

(43) Date of publication:
25.06.1997 Bulletin 1997/26

(51) Int Cl.⁶: **C10B 53/00**, C10B 19/00

(21) Application number: 96309432.1

(22) Date of filing: 23.12.1996

(84) Designated Contracting States:
DE ES FR GR IT

(30) Priority: 22.12.1995 GB 9526289

(71) Applicant: BRC Environmental Services Ltd.
Hainault, Essex IG6 3UJ (GB)

(72) Inventor: Holland, Kenneth Michael Ashwood
Rise Park, Romford, Essex (GB)

(74) Representative: Waldren, Robin Michael
MARKS & CLERK,
57-60 Lincoln's Inn Fields
London WC2A 3LS (GB)

### (54) Pyrolysis of organic materials

(57) A process and apparatus for carrying out the process of destructive distillation of organic material, which comprises: pre-heating said organic material, substantially without pyrolysis of said organic material to elemental carbon, by means of a hot gas stream and/or microwaves; pyrolysing the pre-heated material by means of microwaves to cause substantial fission of carbon-carbon bonds in the organic material, in addition to fission of more polar chemical bonds, so as to produce solid fission products containing elemental carbon, and gaseous by-products, the microwave energy being greater than that which could be used in the preheating step; and collecting said solid fission products downstream of said microwave zone.

FIG . 2

## Description

This invention relates to the pyrolysis (destructive distillation) of organic materials, particularly but not exclusively the pyrolysis of waste materials using microwaves.

It is known to pyrolyse organic materials using microwaves, and my European patent specification 0409835 describes such a process. In general, the material is first pre-heated using microwave and/or other means to the elevated temperature at which pyrolysis begins. Then, with microwave heating during pyrolysis, gases are evolved and these are normally removed and condensed, any residual gases being used advantageously to pre-heat the material. Once pyrolysis is substantially complete, the residue continues to be heated by microwaves to drive off high boiling materials and to leave an inert carbonaceous residue. The process has a number of advantages over non-microwave heat treatments for disposing of waste materials, and it is especially (but not exclusively) useful in the treatment of waste tyre material and similar rubber compounds.

In the interests of efficiency, it is desirable to be able to put in the maximum amount of energy by microwave. This reduces the overall time for the process and increases throughput, for example. In practice, however, the extent of the microwave energy input is limited by the ability of the material being heated to absorb microwave energy. Attempts to input more power than can readily be absorbed result in high voltage fields and electrical breakdown (arcing). This is destructive both of product and equipment. Accordingly, the power input is necessarily kept below the level at which destructive arcing occurs. In general, the power input is set close to the maximum possible during the pre-heat and this level is continued through the pyrolysis region to the end of the after-treatment.

We have now found that, surprisingly, it is possible to use considerably higher microwave input energies than has previously been considered practicable, thereby achieving significant improvements in the efficiency of the process. In particular, we have found that, unexpectedly, the specific power absorbtivity of the material to microwaves increases significantly whilst the material is undergoing pyrolysis. Thereafter, the absorbtivity reduces again. Thus, by increasing the microwave energy input temporarily whilst pyrolysis is occurring, much higher energy input can be safely achieved, leading to an improved process.

In one preferred aspect, the invention provides a method of pyrolysing a material using microwaves, which method comprises subjecting the material to microwaves to raise its temperature from below to above the pyrolysis region, wherein the microwave energy input is elevated in the pyrolysis region relative to its level(s) outside the region.

In another preferred aspect, the invention provides apparatus for pyrolysing a material using microwaves, which comprises a container for the material, at least one microwave source, and means for increasing the microwave energy when (in use of the apparatus) the material is in the pyrolysis region, relative to the energy used or usable when the material is not in the pyrolysis region.

The pyrolysis region is that temperature range in which pyrolysis takes place. As will be well understood by those skilled in the art, when a material is heated it first rises in temperature whilst remaining stable, it then enters a temperature range (the "pyrolysis region") where pyrolysis occurs, and finally the pyrolysed residue can be further heated. The exact temperatures of the pyrolysis region vary with the material but can readily be determined for any material by routine trial. Thus, the onset of pyrolysis is almost invariably marked by the significant evolution of gas and the evident breakdown of the material. Some minor vapour evolution is observed when tyre compounds are subjected to microwave radiation, as a result of local hot spots and the evolution of vaporised oils originally blended in the tyre naterial. This is not, however, breakdown, pyrolytic or otherwise. For tyre tread rubber, the pyrolysis region is usually from about 200 - 300°C but other materials will have a different range.

In accordance with the present invention, we have found that the maximum safe microwave energy input whilst the material is in its pyrolysis range is higher, and usually much higher, than when it is at a temperature outside (above or below) the range. For example, in the case of tyre tread rubber tested in a pilot plant application, the maximum safe microwave energy input can rise from a value of about 0.7kW/kg below the pyrolysis range, to about 1.1 to 1.2 kW/kg and possibly higher in the pyrolysis range. By being able safely to increase the power in this way in the pyrolysis region, the processing time can be greatly shortened and the efficiency of the pyrolysis itself improved.

Whilst in one preferred aspect of the invention, the material is heated by microwaves from below to above the pyrolysis region it is not essential to use microwave heating outside the pyrolysis region. Thus, the pretreatment and/or the after-treatment can be effected by other means. However, the microwave energy input during the pyrolysis region will be higher than could safely be achieved outside the region, eg. at below the pyrolysis temperature.

In a preferred process. pretreatment is effected using both microwave energy and other heat, eg. from recyled gaseous pyrolysis or after-treatment products.

According to a preferred aspect of the present invention, there is provided a process of destructive distillation of organic material, which comprises:

(a) pre-heating said organic material, substantially without pyrolysis of said organic material to elemental carbon, by means of a hot gas stream and/or microwaves;

(b) pyrolysing the pre-heated material by means of microwaves to cause substantial fission of carbon-carbon bonds in the organic material, in addition to fission of more polar chemical bonds, so as to produce solid fission products containing elemental carbon, and gaseous by-products, the microwave energy being greater than that which could be used in step (a);

(c) collecting said solid fission products downstream of said microwave zone; and preferably

(d) recycling at least part of said gaseous by-products to said hot gas stream to effect said pre-heating.

The process according to the invention can be operated as a continuous or batch process as desired.

In one embodiment of the invention, the gaseous by-products can be recycled to function as the above-mentioned gas steam; it is also preferred that products in the nature of the oils or other fluids should be collected and where appropriate, used as fuels to provide at least some of the energy input into the process.

In the process according to the invention, the material being subjected to destructive distillation is such that it contains a substantial proportion of carbon-carbon bonds (such as a hydrocarbon or carbohydrate material). Examples of such materials include natural or synthetic rubber compounds, and agricultural waste material such as citrus fruit peel, olive waste products, and nut shell (e.g. coconut shell), and animal waste (such as sewage, slurry or the like). The organic material is generally such that the solid fission products produced predominantly comprise elemental carbon.

In some embodiments (and particularly where the material being pyrolysed is a rubber compound), it is preferred that the organic material subjected to microwave discharge in the process according to the invention should contain carbon filler; a particularly preferred such material is waste tyre material. Waste tyre material pyrolysed according to the present invention may be in bulk or finely divided form (e.g. chopped form or pulverulent form). Such a material may contain, in addition to carbon filler, organic textile reinforcement and/or metal wire (e.g. steel wire) reinforcement. When an organic textile material is employed, the later is generally substantially carbonised in the discharge zone; when metal wire reinforcement is employed, the latter wire is substantially unaffected by the microwave discharge and is therefore collected together with the solid fission products.

The process of the invention can be utilised to pyrolyse non-microwavable materials by mixing them with a microwavable material. This technique is described in my international patent publications nos. WO 88/08871 and WO 92/02598, and U.S. patents 5364821 and 5387321 to which reference should be made for further details.

In the process according to the present invention, the waste material is preferably pre-heated to a temperature of at least about 250°C before being subject to the microwave discharge in the pyrolysis region. It is particularly preferred that both the pre-heating stage and the pyrolysis stage should be carried out in a vessel (which is preferably thermally insulated and of suitable pressure rating) through which the organic material is passed on a conveyor in a continuous manner.

Typically, the same conveyor is used to forward the organic material through the pre-heating zone, to feed the pre-heated material to the pyrolysis zone, and to forward it through the zone and on for after-treatment (if any). Such a conveyor may be, for example, an endless belt comprising stainless steel, or a slot conveyor comprising slots of a microwave transparent material.

Generally, it is preferred that the pre-heating zone and the pyrolysis zone each have a purge lock both for supply of the organic material and for removal of solid fission products therefrom so as to substantially prevent inflow of oxygen-containing gas into the respective zone.

The gas stream used in the process according to the invention (which may be supplied in a countercurrent relative to the feed of organic material through the microwave discharge zone, or fed in the same direction) may additionally contain a separately supplied hydrocarbon or inert gas such as nitrogen, as well as at least some of the gaseous products of the destructive distillation. The gas stream may be continuously recirculated to the microwave discharge zone (preferably after scrubbing of the gas) and is in some embodiments (for example, where it is desirable to minimise microwave power input) at a temperature of at least 250°C (such as 300 to 500°C) when entering the microwave discharge zone.

The microwave discharge used in the process according to the invention may be in the low gigahertz frequency range (e.g. about 2.4 gigahertz).

According to another aspect of the invention there is provided a process for heating a material with microwave energy, comprising: determining the maximum capacity of the material to absorb microwave energy at a plurality of different temperatures; heating the material using microwave energy in such a manner that at each of said temperature the microwave energy is set at a level below said maximum capacity. Advantageously, the microwave energy is set at a level as close as possible to said level below the maximum capacity.

This process is especially useful in the pyrolysis of rubber, as described above.

Reference will now be made to the accompanying drawings, in which:

Figure 1 is a schematic illustration of the variation in absorbtivity of tyre tread rubber to microwaves, relative to temperature.

Figure 2 is a simplified longitudinal cross-section of one embodiment of apparatus according to the invention; and Figure 3 is a graph showing the variation of power relative to temperature for Example 1.

When microwave radiation is applied to an absorbent material, the field is attenuated as it passes through. This attenuation is expressed as heat energy and the power liberated is proportional to $|E|^2 o$ (W/m$^3$), where E is the field strength at any point and o is the conductivity (S/m) of the material.

In the case of a plane wave propagating through a uniform dielectric medium, the intensity of the field is reduced by a factor of 1/e (e - Naperian Logarithm base) in a Distance D, often referred to as the penetration depth. This may be calculated as follows:-

$$D = \frac{c.\sqrt{2}}{\omega\left[\left[\epsilon'^2-\left(\dfrac{\sigma}{\omega\epsilon_0}\right)^2\right]^{1/2}-\epsilon'\right]^{1/2}}$$

where:-

c = velocity of light.

$\omega$ = angular frequency of the wave.

$\in'$ = the real part of the relative permittivity.

$\sigma$ = conductivity of the material.

$\in_0$ = permittivity of space.

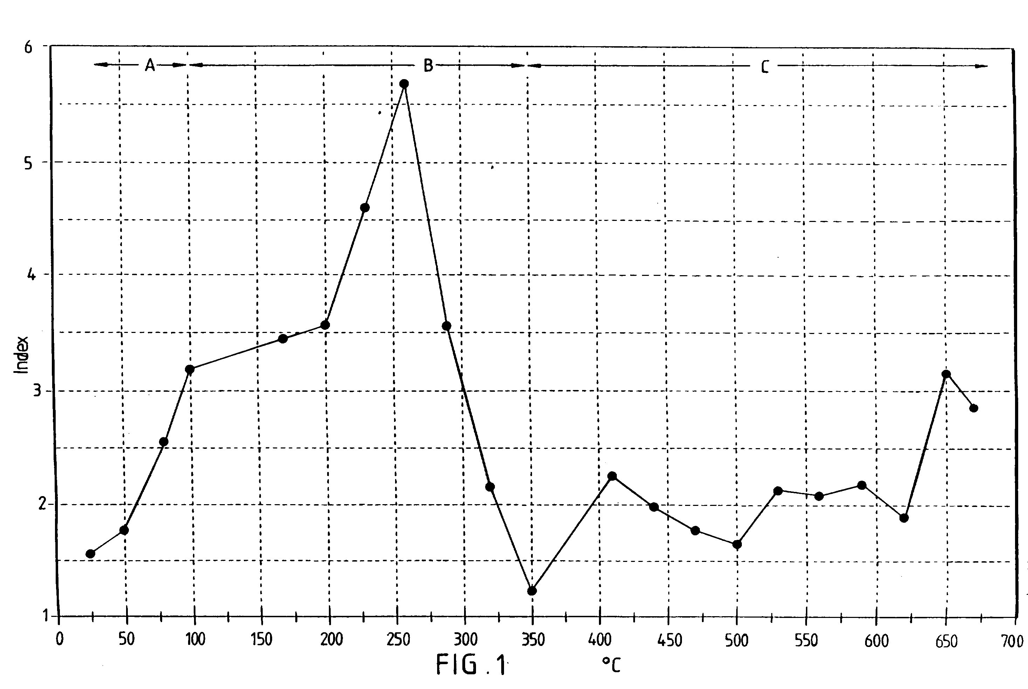

A series of field decay curves were drawn, using radio frequency properties measured at various temperatures. The area beneath each curve was calculated by Simpson's rule. allowing the relative power adsorption capacity, at each temperature to be plotted. The results are shown in Figure 1.

Referring to Figure 1, the region A is the pretreatment region where the temperature rises but there is no significant decomposition of the rubber. Region B is the pyrolysis region in which the rubber is decomposed with fission of the carbon-carbon and other bonds, and evolution of gases. Region C is the after-treatment region where pyrolysis is essentially complete but where continued heating drives off high boiling tars etc.

The data shows an unexpected doubling of capacity in the region from 200 - 300°C. It is in this region that the pyrolytic breakdown of the rubber molecules occurs and it is concluded that the existence of transient molecules increases the conductivity of the system. The lower capacity above 350°C is explained by the transition to carbon black/ steel mixture.

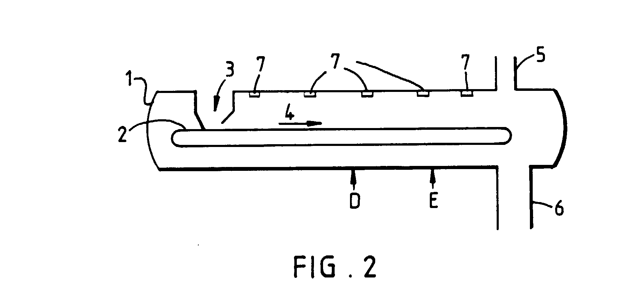

Referring to Figure 2, there is shown an elongate housing 1 which is heat insulated and includes a conveyor 2 mounted longitudinally therein. Above one end of conveyor 2 is a feed hopper 3 for supplying material on to the conveyor for carriage to the other end thereof in the direction of arrow 4. Housing one has a gas exit 5 and a materials exit 6 to below the downstream end of conveyor 2. Mounted above conveyor 2 are a series of microwave generators 7 disposed to direct microwaves out material passing therebelow on conveyor 2. The housing would also include a number of other features (omitted for simplicity) such as, for example, gas purge locks.

In use, the material to be treated is loaded into hopper 3 and dispensed out moving conveyor 2. As it passes in the direction of arrow 4, it is heated by microwaves from generators 7. As it reaches its pyrolysis temperature as at D, it is subjected to much higher microwave energy until pyrolysis is complete (at E) whereupon the microwave energy is reduced to (or below) the maximum then applicable. The increased microwave energy in region D-E can be provided in any convenient way, such as by spacing the generators 7 more closely together and/or by operating them at higher power than those outside the D-E region.

This closer spacing of the generators 7 has the advantage that the length of the conveyor can be reduced, thereby reducing capital costs and maintenance costs.

The solids exiting by 6 can be passed by magnets to remove any ferromagnetic residue and then disposed of or treated as desired. The gases exiting 5 can be condensed to recover useful by-products and/or subjected to heat exchange to recover heat for use elsewhere in the process.

In order that the invention may be more fully understood, the following Examples are given by way of illustration only.

Comparative Example 1

33.56kg (75lb) of shredded tyres were subjected microwave energy in a conventional manner. The initial power was 10 kW, which was raised to 20 kW within 15 minutes. The power was maintained at 20 kW for 1 hour 50 minutes, then the power was increased to 24 kW for 20 minutes.

The results are illustrated in Table 1. The entire process takes 2½ hours, and the total energy requirement was 46.57 kWh.

Example 1

33.56 kg (75lb) of shredded tyres were subjected to microwave energy using the process according to the invention. Thus, the level of microwave energy was varied according to the capacity of the rubber to absorb microwaves.

The results are illustrated in Table 2. The entire process took 1 hour 51 minutes, and the total energy requirement was 38.12 kWh. It will be clear that the total time to complete the process has been reduced, and the energy requirement has been reduced by over 15%. With further experimentation, to determine the practical maximum energy that may be applied, it would be possible to achieve additional savings.

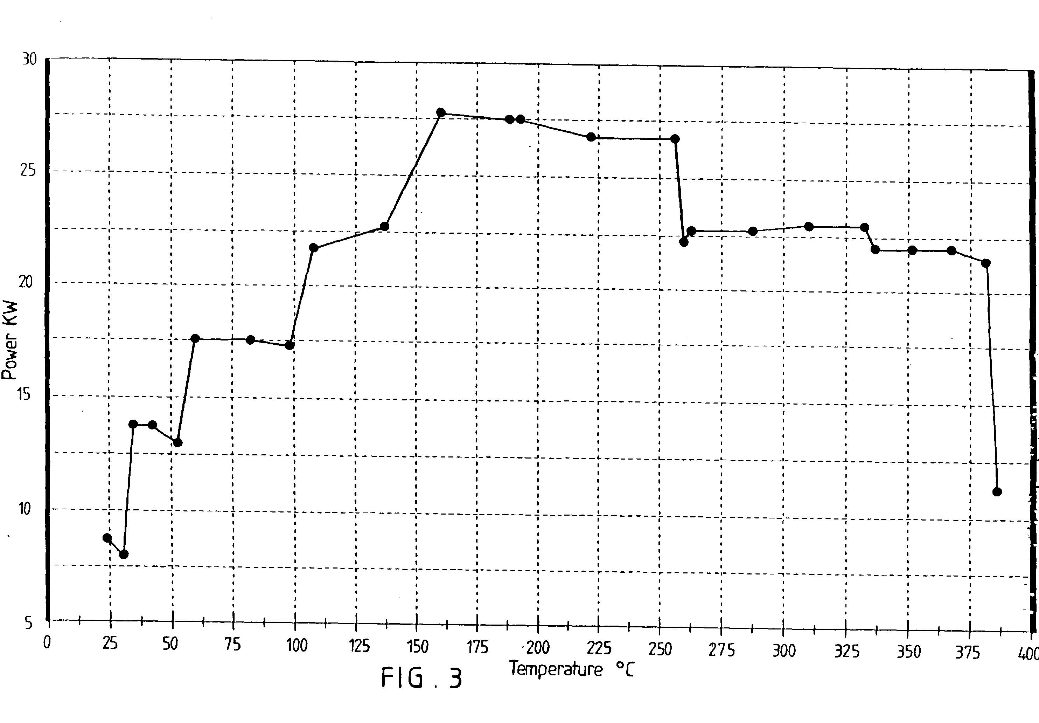

A graph of nett power vs. load temperature was plotted for the results of Example 1, and is shown in Figure 3.

TABLE 1

|  | Forward Power | Reverse Power | Power to load | Basket Temp. | O/H Vapour Temp. |
|---|---|---|---|---|---|
|  | kW | kW | kW | Deg.C | Deg.C |
| 00:00 | 10 | 1.00 | 9 | 10 | 10 |
| 00:05 | 12 | 2.00 | 10 | 16 | 12 |
| 00:07 | 16.5 | 2.75 | 13.75 | 19 | 16 |
| 00:10 | 16.5 | 3.00 | 13.5 | 25 | 24 |
| 00:15 | 20 | 3.00 | 17 | 35 | 36 |
| 00:20 | 20 | 2.25 | 17.75 | 47 | 44 |
| 00:25 | 20 | 2.00 | 18 | 59 | 52 |
| 00:30 | 20 | 1.25 | 18.75 | 72 | 54 |
| 00:35 | 20 | 1.25 | 18.75 | 85 | 60 |
| 00:40 | 20 | 1.00 | 19 | 97 | 66 |
| 00:45 | 20 | 0.50 | 19.5 | 110 | 74 |
| 00:50 | 20 | 0.50 | 19.5 | 123 | 86 |
| 00:55 | 20 | 0.50 | 19.5 | 136 | 90 |
| 01:00 | 20 | 1.00 | 19 | 148 | 90 |
| 01:05 | 20 | 1.25 | 18.75 | 160 | 90 |
| 01:10 | 20 | 1.50 | 18.5 | 171 | 88 |
| 01:20 | 20 | 1.50 | 18.5 | 193 | 84 |
| 01:25 | 20 | 1.25 | 18.75 | 205 | 100 |
| 01:30 | 20 | 1.25 | 18.75 | 216 | 106 |
| 01:35 | 20 | 1.25 | 18.75 | 227 | 110 |
| 01:40 | 20 | 1.25 | 18.75 | 238 | 108 |
| 01:45 | 20 | 1.25 | 18.75 | 249 | 108 |
| 01:50 | 20 | 1.25 | 18.75 | 259 | 108 |

TABLE 1   (continued)

| | Forward Power | Reverse Power | Power to load | Basket Temp. | O/H Vapour Temp. |
|---|---|---|---|---|---|
| | kW | kW | kW | Deg.C | Deg.C |
| 01:55 | 20 | 1.00 | 19 | 268 | 106 |
| 02:00 | 20 | 1.00 | 19 | 278 | 104 |
| 02:05 | 20 | 1.00 | 19 | 289 | 100 |
| 02:10 | 24 | 1.50 | 22.5 | 310 | 94 |
| 02:15 | 24 | 1.50 | 22.5 | 331 | 94 |
| 02:20 | 24 | 1.75 | 22.25 | 349 | 92 |
| 02:25 | 24 | 2.00 | 22 | 365 | 90 |
| 02:30 | 24 | 2.25 | 21.75 | 379 | 88 |
| 02:31 | off | off | off | 382 | off |

TABLE 2

| Time | Forward Power | Reverse Power | Power to load | Load Temp. | O/H Vapour Temp. |
|---|---|---|---|---|---|
| | kW | kW | kW | Deg.C | Deg.C |
| 00:00 | 10 | 1.25 | 8.75 | 24 | 24 |
| 00:04 | 10 | 2.00 | 8 | 30 | 26 |
| 00:07 | 16 | 2.25 | 13.75 | 33 | 28 |
| 00:10 | 16 | 2.25 | 13.75 | 40 | 31 |
| 00:14 | 16 | 3.00 | 13 | 49 | 38 |
| 00:17 | 20 | 2.50 | 17.5 | 55 | 44 |
| 00:24 | 20 | 2.50 | 17.5 | 75 | 54 |
| 00:29 | 20 | 2.75 | 17.25 | 89 | 64 |
| 00:32 | 25 | 3.25 | 21.75 | 98 | 68 |
| 00:39 | 25 | 2.25 | 22.75 | 128 | 90 |
| 00:44 | 30 | 2.25 | 27.75 | 151 | 114 |
| 00:49 | 30 | 2.50 | 27.5 | 180 | 134 |
| 00:54 | 30 | 2.50 | 27.5 | 184 | 140 |
| 00:59 | 30 | 3.25 | 26.75 | 214 | 144 |
| 01:04 | 30 | 3.25 | 26.75 | 249 | 147 |
| 01:09 | 26 | 3.75 | 22.25 | 252 | 142 |
| 01:14 | 27 | 4.25 | 22.75 | 255 | 148 |
| 01:19 | 27 | 4.25 | 22.75 | 281 | 138 |
| 01:24 | 27 | 4.00 | 23 | 304 | 130 |
| 01:29 | 27 | 4.00 | 23 | 327 | 110 |
| 01:30 | 26 | 4.00 | 22 | 332 | 115 |
| 01:34 | 26 | 4.00 | 22 | 347 | 104 |

TABLE 2   (continued)

| Time | Forward Power | Reverse Power | Power to load | Load Temp. | O/H Vapour Temp. |
|---|---|---|---|---|---|
| | kW | kW | kW | Deg.C | Deg.C |
| 01:39 | 26 | 4.00 | 22 | 364 | 100 |
| 01:44 | 26 | 4.50 | 21.5 | 378 | 85 |
| 01:46 | 15 | 3.75 | 11.25 | 383 | 80 |
| 01:51 | off | off | off | 367 | off |

**Claims**

1. A method of pyrolysing a material using microwaves, the method comprising subjecting the material to microwaves to raise its temperature from below to above the pyrolysis region, characterised in that the microwave energy input is elevated in the pyrolysis region relative to its level outside the region.

2. A method according to claim 1, wherein the method further comprises a pretreatment and/or after-treatment of heating the material outside the pyrolysis region.

3. A method according to claim 2, wherein the pretreatment is affected by using microwave energy and other heating means.

4. A method according to claim 3, wherein said other heating means is a hot gas stream.

5. Apparatus for pyrolysing a material using microwaves, the apparatus comprising a container for the material, at least one microwave source, means for subjecting the material to microwaves, characterised in that the apparatus further comprises means for increasing the microwave energy when the material is in the pyrolysis region, relative to the energy used or usable when the material is not in the pyrolysis region.

6. A process of destructive distillation of organic material, which comprises:

   (a) pre-heating said organic material, substantially without pyrolysis of said organic material to elemental carbon, by means of a hot gas stream and/or microwaves;

   (b) pyrolysing the pre-heated material by means of microwaves to cause substantial fission of carbon-carbon bonds in the organic material, in addition to fission of more polar chemical bonds, so as to produce solid fission products containing elemental carbon, and gaseous by-products, the microwave energy being greater than that which could be used in step (a); and

   (c) collecting said solid fission products downstream of said microwave zone.

7. A process according to claim 6, wherein the process further comprises recycling at least part of said gaseous by-products to said hot gas stream to effect said pre-heating.

8. A process according to any one of claims 6 or 7, wherein products in the nature of oils or other fluids are collected and used as fuels to provide at least some of the energy input into the process.

9. A process according to any one of claims 6 to 8, wherein the organic material subjected to microwave discharge contains carbon filler.

10. A process according to claim 9, wherein the organic material is waste tyre material

11. A process according to any one of claims 6 to 10, wherein the organic material is in a finely divided form.

12. A process according to any one of claims 6 to 11, wherein the waste material is pre-heated in step (a) to a temperature of at least 250°C.

13. A process according to claim 5, wherein pre-heating and the pyrolysis are carried out in a vessel.

14. A process according to claim 13, wherein the vessel is thermally insulated and of suitable pressure rating through which the organic material is passed on a conveyor in a continuous manner.

15. A process according to claim 5, wherein the pre-heating zone and the pyrolysis zone each have a purge lock both for supply of the organic material and for removal of solid fission products therefrom so as to substantially prevent inflow of oxygen-containing gas into the respective zones.

16. A process according to claim 15, wherein the hot gas stream is supplied in a countercurrent relative to the feed of organic material through the microwave discharge zone.

17. A process according to any one of claims 6 to 15, wherein the gas stream contains separately supplied hydrocarbon or inert gas and at least some of the gaseous products of the destructive distillation.

18. A process for heating a material with microwave energy, comprising:

   determining the maximum capacity of the material to absorb microwave energy at a plurality of different temperatures;
   heating the material using microwave energy in such a manner that at each of said temperature the microwave energy is set at a level below said maximum capacity.

19. A process according to claim 18, wherein the microwave energy is set at a level as close as possible to said level below the maximum capacity.

20. A process according to claim 18 or 19, wherein the material is rubber.

FIG.1

EP 0 780 457 A2

FIG . 2

FIG . 3